(19) Europäisches Patentamt
European Patent Office
Office européen des brevets

(11) **EP 0 726 541 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.$^7$: **G06K 19/06**, G06K 19/077

(21) Anmeldenummer: **96101726.6**

(22) Anmeldetag: **07.02.1996**

(54) **Verfahren zur Herstellung von Ausweiskarten**

Method for the fabrication of identity cards

Méthode pour la fabrication des cartes d'identité

(84) Benannte Vertragsstaaten:
**CH DE FR GB IT LI**

(30) Priorität: **09.02.1995 DE 19504194**
        **09.02.1995 DE 29502080 U**

(43) Veröffentlichungstag der Anmeldung:
**14.08.1996 Patentblatt 1996/33**

(73) Patentinhaber: **INTERLOCK AG**
**8954 Geroldswil (CH)**

(72) Erfinder: **Vogt, Werner**
**CH-5453 Remetschwil (CH)**

(74) Vertreter: **Jakelski, Joachim, Dr.**
**Otte & Jakelski Patentanwälte**
**Mollenbachstrasse 37**
**71229 Leonberg (DE)**

(56) Entgegenhaltungen:
**EP-A- 0 249 266**          **EP-A- 0 376 062**
**EP-A- 0 587 011**          **GB-A- 2 279 610**
**US-A- 5 387 306**

**Beschreibung**

Stand der Technik

Die Erfindung geht aus von einem Verfahren zur Herstellung von Ausweiskarten nach dem Oberbegriff des Anspruchs 1.

Eine nach diesem Verfahren hergestellte Ausweis- oder Identitätskarte, speziell mit einem elektronische oder elektrische Bauteile enthaltenden Aufbau, die für beliebige Anwendungszwecke Verwendung finden kann, wird allgemein auch als Chipkarte bezeichnet.

Bei solchen Chipkarten oder, allgemein ausgedrückt, bei Trägerelementen, die auch elektronische oder lediglich elektrische Bauelemente enthalten, im einfachsten Fall also beispielsweise eine Spule und/oder einen Kondensator, die schwingkreisartig auf eine bestimmte Frequenz abgestimmt sind, wodurch Zugangskontrollen, Diebstahlsicherungen durch Befestigen solcher Trägerelemente an Waren, Personenüberprüfungen u.dgl. möglich sind, können sich bei der Herstellung erhebliche Probleme ergeben.

Üblicherweise werden solche (Chip)Karten oder Trägerelemente, die ebenfalls nicht selten eine Kartenform oder jedenfalls eine flächige Elementform aufweisen, nach den üblichen bekannten Laminierverfahren hergestellt, was bedeutet, daß mehrere Kartenschichten, die beispielsweise und bevorzugt aus PVC bestehen, in einem Laminator unter gleichzeitiger Wärme- und vergleichsweise hoher Druckeinwirkung miteinander verbunden, nämlich kaschiert werden, was bedeutet, daß sich die einzelnen Kartenschichten mindestens an den einander jeweils zugewandten Flächen durch die Wärmezufuhr so weit erhitzen, daß sie in diesen Bereichen praktisch untrennbar miteinander durch Verschweißen verbunden werden.

Aus vielerlei Gründen kann sich ein solcher durch Wärme- und Druckeinwirkung auszeichnender Laminiervorgang für den Einschluß empfindlicher elektronischer Bauelemente als ungeeignet erweisen, da diese mindestens erheblichen Beanspruchungen beim Laminieren unterworfen werden, sie leiden und können durch das Laminieren auch zerstört werden, wobei ein weiterer Gesichtspunkt auch die Möglichkeit betrifft, daß sich die elektrischen Bauelemente durch die Oberfläche angrenzender Kartenschichten abzeichnen, also erkennbar sind. Daher ist eine Berührung solcher Bauelemente oder deren direktes Anliegen an angrenzende Schichten unerwünscht, nicht zuletzt auch deshalb, weil die Bauelemente nicht notwendigerweise über eine einwandfrei plane glatte Oberfläche verfügen, sondern Kerben oder Leerstellen aufweisen, so daß es zu Wellungen kommen kann oder angrenzendes verschweißtes Kunststoffmaterial fließt in solche Zwischenräume ein, was wiederum zerstörend wirken kann.

Trotz vieler Versuche, durch den Einsatz üblicher Laminatoren oder Laminierverfahren auch hohen Ansprüchen gewachsene Chipkarten praktisch ausschußlos herzustellen, ist dies über Jahre nicht gelungen, da man auf nicht überwindbare Grenzen stößt, auch wenn, was bei Laminierverfahren durchaus naheliegt, eine Vielzahl von Einwirkungsparametern jeweils geändert wird, so daß man sich zwar einem gewünschten Ergebnis annähert, aber nicht in der Lage ist, mit dem bekannten Laminierverfahren sozusagen hundertprozentige Erfolge zu erzielen. Beispielsweise ergab sich bei der Anmelderin trotz vielfacher jahrelanger Bemühungen eine Fertigungsfunktionsgrenze von lediglich 95 % auch unter Zugrundelegung kompliziertester Realisierungsmöglichkeiten des jeweils eingesetzten Laminierverfahrens.

Eine Vorrichtung und ein Verfahren zur Herstellung von Karten mit integrierten Schaltkreisen in länglicher Bandform im kontinuierlichen Verfahren geht aus der US 5 387 306 hervor. Hierbei wird der Kartenschichtverbund zwischen Endlosbändern transportiert, wobei ein Druckvorgang mit Hilfe von Heizschuhen erfolgt.

Laminierverfahren sind aus der EP-A-0 621 139, der EP-A-0 399 410, der US 4 999 065 oder der GB-A-2 276 291 bekannt. Die Ansprüche sind gegen US 5 387 306 abgegrenzt.

Vorrichtungen und Verfahren zur Herstellung von integrierte Schaltkreisen enthaltenden Karten sind ferner in der EP-A-249266, GB-A-2279610, der EP-A-0 376 062 und der EP-A-0 587 011 offenbart.

Der Erfindung liegt die Aufgabe zugrunde, ein Herstellungsverfahren und Mittel zu dessen Durchführung für ein elektrische oder elektronische Bauteile enthaltendes Trägerelement, üblicherweise in Kartenform, speziell also für eine Chipkarte, Telefonkarte oder eine sonstige Identitätskarte beliebiger Art zu schaffen, die bei gefälligem Aussehen in beliebiger Form und Verteilung auch größere elektronische und/oder elektrische Bauelemente enthalten kann und bei dem sichergestellt ist, daß es zuverlässig zu keinen Beschädigungen dieser Bauelemente durch das Herstellungsverfahren selbst kommt.

Vorteile der Erfindung

Die Aufgabe wird gelöst durch die Merkmale des Anspruchs 1. Vorteilhafte Ausführungsformen sind Gegenstand der abhängigen Ansprüche.

Die Erfindung hat den Vorteil, daß es nunmehr möglich ist, Trägerelemente bzw. Chipkarten herzustellen, die sozusagen in einer gesonderten Zwischenschicht auch hochempfindliche elektrische oder elektronische Bauelemente beliebiger Dicke, Form und Abmessungen enthalten können, die beim Herstellungsverfahren zwischen Deckschichten in einer einschließenden Masse schwimmend, also im wesentlichen berührungsfrei gegenüber den angrenzenden Schichten der Karte oder des Trägerelements gehalten sind und in dieser Position auch, wie ohne weiteres einzusehen, nach dem Aushärten der sie einschließenden Masse verankert und gehalten bleiben, wobei diese Masse selbst innerhalb des Schichtenstapels, der die Karte oder das Trägerelement ausmacht, eine von den anderen Schichten deutlich unterscheidbare eigene Schicht mit vorgegebenen Dickenabmessungen bildet.

Insofern löst sich die Erfindung entschieden von den bisherigen Herstellungsverfahren der bekannten Laminiertechnik, bei denen durch praktisch unbegrenzte, jedenfalls sehr starke Druckeinwirkung bei bemessener Wärmezufuhr ein Kaschiervorgang, also ein Verschweißen der Schichten verfolgt wird, der notwendigerweise dazu führt, daß sich solche Schichten, wie die Erfindung sie anstrebt und letztlich auch realisiert, gar nicht bilden können; sie würden nämlich durch den ständig einwirkenden hohen Druck bei entsprechender Hitze einfach weggedrückt werden, seitlich herausquellen und dazu führen, daß die empfindlichen elektronischen und elektrischen Bauteile in erhebliche Wärme- und Druckkontakte mit den anderen Kartenschichten gelangen.

Durch die einwandfreie Positionierung der elektrischen und elektronischen Bauteile mit Abstand innerhalb der restlichen Kartenschichten, die bei einfachen Ausführungsformen Deckschichten, aber auch je nach Realisierungsform der Endkarte, selbst wieder Zwischenschichten sein können, ergeben sich nicht nur bei der ursprünglichen Einbettung und Aufnahme dieser Bauteile Vorteile, sondern auch während des anschließenden Gebrauchs, da mechanische oder Druckbeanspruchungen sozusagen nicht sofort auf die elektronischen oder elektrischen Bauteile durchschlagen, die innerhalb ihrer eigenen erstarrten, sie einschließenden Masseschichten sicher gehalten und abgeschirmt sind.

Es ist daher auch möglich, in entsprechende Trägerelemente oder Karten beliebig große elektrische oder elektronische Bauelemente einzulegen, beispielsweise auch aus mehreren, üblicherweise aufgedruckten Wicklungen bestehende Antennenformen, die in Verbindung mit miniaturisierten Kondensatoren und weiteren sonstigen elektronischen Bauelementen auch Schwingkreise bilden, so daß berührungslose Abtastverfahren eingesetzt werden können.

Ein Vorteil bei vorliegender Erfindung besteht daher auch darin, daß durch die Aufgabe der Grundprinzipien üblicher Laminierverfahren die elektronischen oder elektrischen Bauelemente belastungsfrei in die Karte oder das Trägerelement eingebracht, dort versiegelt und durch Benutzung der Karte verwendet werden können, wobei die Erfindung auch die Herstellung einer solchen Karte insofern vereinfacht, als die im Grunde komplizierten, stets eine sorgfältige Abstimmung auf Materialien, deren Art, Dicke, sonstige Beschaffenheit erforderlich machenden Parameter durch eine Art "Klebvorgang" ersetzt werden, der die Erfindung allerdings nicht in ihrer Konzeptionsbreite beschreiben kann. Jedenfalls ist die Zuführung von Wärme überhaupt nicht mehr erforderlich, und die ansonsten sehr kräftige Druckaufbringung erfolgt in abgemessener, durch Begrenzung insofern wirksamer Weise, daß sich aus der mindestens die elektrischen oder elektronischen Bauteile einschließenden Masse weitere Kartenschichten bilden nach deren Erstarrung bzw. Aushärtung. Erkennbar verläuft der Herstellungsvorgang daher durch die völlige Wärmefreiheit und den nur begrenzten, sehr zurückhaltend zur Einwirkung gebrachten Druck für die elektronischen oder elektrischen Bauelemente vollkommen belastungsfrei, so daß weder bei der Herstellung mit auf den Herstellungsvorgang selbst zurückzuführenden Ausschuß zu rechnen ist, noch mit späteren Störungen beim Gebrauch.

So ist es zwar für sich selbst gesehen oder auch schon in Verbindung mit Laminierverfahren bekannt, zwischen einzelnen, miteinander zu verbindende (Kunststoff)Schichten ein- oder beidseitig klebende (Kunststoff)Schichten einzubringen, jedoch jeweils stets mit dem Zweck, hierdurch die aneinandergrenzenden Laminatschichten miteinander zu verbinden, wobei diese Verbindung umso besser und günstiger ist, umso mehr Druck und gegebenenfalls auch Wärme zur Einwirkung gebracht wird. Diese "Klebschichten" beim üblichen Laminierverfahren sind daher auch (lediglich) hauchdünn, da sie keine eigenen Aufgaben erfüllen, so daß auch keine Gefahr bestand, daß die Klebschichten aus dem Schichtverbund bei der Herstellung oder später austreten.

Dies ist anders und unterschiedlich bei vorliegender Erfindung, bei der Klebmasse oder Leim oder auch halbflüssige klebrige Kunststoffmasse in so reichlichem Maße zugegeben wird, daß sich durch diese der "schwimmende" Einschluß der elektrischen oder elektronischen Bauteile realisieren läßt, gegebenenfalls zusammen mit deren eigener flächiger Trägerschicht, wobei dann diese Klebmassen, die sich während des Herstellungsvorgangs vollkommen gleichmäßig über die gesamte Kartenfläche ausdehnen, nach dem Aushärten eigene Schichten mit an jeder Stelle praktisch gleicher Schichtdicke und insofern als Laminatschichten bezeichenbar der so hergestellten Karte bilden. Innerhalb dieser die Bauteile so einschließenden Schichtmasse sind die Bauteile von der Herstellung bis zum späteren Gebrauch sicher und zuverlässig gehalten, gelagert und auch geschützt, auch gegen Durchdrükken oder Anliegen an angrenzende Schichten, so daß diese sonst bei entsprechender Transparenz unter Umständen sogar sichtbar wären.

Ein weiterer Vorteil besteht darin, daß die eingebrachten elektrischen oder elektronischen Bauelemente durchaus auch Einschlüsse, Vorsprünge, Leerstellen u.dgl. aufweisen können, wie überhaupt die ganze mittlere (Träger) Schicht für solche Bauelemente, falls vorhanden; denn solche Einschlüsse oder Vorsprünge werden durch das vorgeschlagene Herstellungsverfahren aufgefangen und integriert. Daher ist es auch zutreffend, bezüglich des erfindungsgemäßen Herstellungsverfahrens davon zu reden, daß die elektrischen bzw. elektronischen Bauelemente sozusagen in die Karte eingeschwemmt werden, sie liegen lose zwischen angrenzenden Schichten und werden auch nicht selbst einem Preßdruck ausgesetzt, da dieser von der die Bauelemente einschließenden Masse aufgefangen und im übrigen auch ausgenutzt wird, um sich selbst als gleichmäßige Schicht zwischen äußeren angrenzenden Schichten auszubreiten, den Raum auszufüllen und anschließend auszuhärten, wobei diese Ausbreitung kein weiteres Hervorquellen an den Randbereichen der einschließenden Schicht oder Masse bedeutet, denn die Druckaufbringung stoppt dann, sozusagen vollautomatisch, ab, wenn, abgestimmt auf die Menge des jeweils eingebrachten, entsprechend halbflüssigen, hochviskosen Klebstoffs oder Leims davon ausgegangen werden kann, daß sich diese die elektrischen und elektronischen Bauelemente einschließende Masse jedenfalls über die Kartenfläche gleichmäßig ausgebreitet hat.

Diese anfänglich konstante, anschließend, nämlich bei Erreichen einer vorgegebenen Dicke ein Ende findende Druckaufbringung läßt sich durch Anschläge für eine (obere) Druckplatte realisieren, die nur so weit an eine (untere) Gegendruckplatte, zwischen welchen beiden Platten die miteinander zu verbindenden Schichten der Karte liegen, heranfährt, wie dies den tatsächlichen Dickenabmessungen der eingebrachten Kartenteilschichten und der zugestandenen (beidseitigen) Klebstoffschicht entspricht.

Die Erfindung eröffnet eine Vielzahl neuer Möglichkeiten für die Realisierung von bevorzugt kartenförmigen Chip-Trägerelementen, da es erstmals gelingt, auch hochkomplizierte elektronische Systeme problemlos in einer Kartenform zu integrieren, auch wenn solche Systeme besonders empfindlich sind oder kompliziert einzulagern sind oder solche Ausgußformen aufweisen, daß sie mit üblichen Laminiertechniken gar nicht bearbeitet werden können.

Zeichnung

Einige bevorzugte Ausführungsbeispiele der Erfindung sowie das erfindungsgemäße Herstellungsverfahren werden im folgenden anhand der Zeichnung näher erläutert; dabei zeigen:

Fig. 1   in einer Seitenansicht einen ersten möglichen Schichtaufbau einer herzustellenden Karte mit störungsfrei integrierten elektrischen oder elektronischen Bauelementen und

Fig. 2   eine Draufsicht auf den Kartenaufbau der Fig. 1 längs der Linie II-II, wobei schließlich

Fig. 3   den fertigen, ausgehärteten Preßverbund der so hergestellten Kartenform zeigt, die in einem späteren Bearbeitungsschritt noch auf die endgültigen Außenabmessungen einer Karte in üblicher Form gebracht wird;

Fig. 4   zeigt eine erste mögliche Ausführungsform einer Vorrichtung zur druckbegrenzten Herstellung eines Kartenverbundes unter Einschluß mindestens einer sich nach dem "Laminieren" des Kartenverbundes durch Aushärtung realisierenden Klebstoffschicht;

Fig. 5   zeigt eine weitere mögliche Ausführungsform einer Vorrichtung zur Herstellung von kartenförmigen Trägerelementen für elektrische und elektronische Bauelemente, bei welcher ein kontinuierlicher Zufuhrvorgang von Schichtwerkstoffen zwischen Rollen oder Walzen erfolgt, und

Fig. 6   zeigt in Draufsicht eine mögliche Ausführungsform eines Zwischenerzeugnisses mit eingebetteten elektrischen oder elektronischen Bauteilen, die auf einer Trägerschicht gelagert sind und allseitig von der einschließenden Masse eingeschlossen sind, wobei diese zusätzliche Klebstoffmassen-Schicht durch Abziehen einer für den ursprünglichen Verbindungsvorgang vorgesehenen obersten Schicht, beispielsweise Papierdeckschicht, nach oben freiliegt.

Beschreibung der Ausführungsbeispiele

Der Grundgedanke vorliegender Erfindung besteht darin, bei der Herstellung eines vorzugsweise die übliche Kartenform aufweisenden Trägerelements als Identitätskarte, Zugangskarte, Chipkarte u.dgl. die jeweils gewünschten und notwendigen elektrischen bzw. elektronischen Bauelemente innerhalb des Kartenverbunds sozusagen einzuschwemmen, anfänglich also praktisch lose zu lagern, den Kartenverbund durch Zuführung eines bemessenen kontinuierlichen Drucks, der letztlich durch Anschlagwirkung aufgehalten wird, herzustellen und anschließend die Einschwemm-Massenschicht für die elektrischen oder elektronischen Bauelemente zur Aushärtung zu bringen, so daß diese eine selbständige Schicht innerhalb des Kartenverbunds darstellt, der, da die Einschwemm-Massenschicht gleichzeitig eine Klebstoffschicht ist, vollkommen untrennbar verbunden ist.

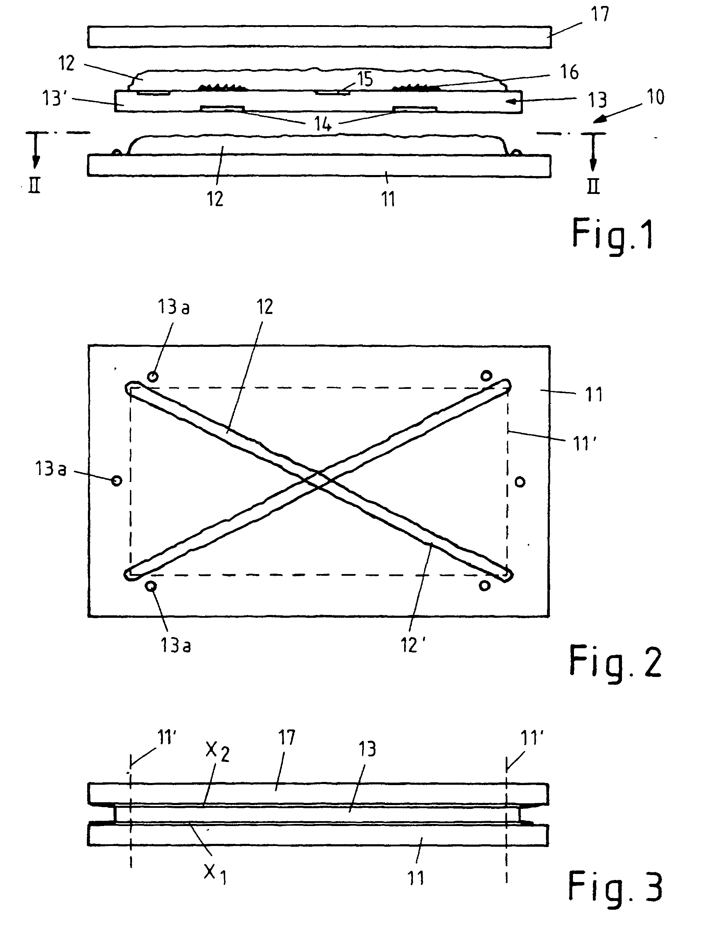

Eine erste mögliche Realisierungsform der Erfindung ist in Fig. 1 dargestellt und bezieht sich darauf, aus einzelnen Kartenschichten oder Laminaten die fertige Karte unter Einschluß elektronischer und/oder elektrischer Bauteile herzustellen.

Zu diesem Zweck ist eine untere oder erste Kartenteilschicht 11, bevorzugt als PVC-Schicht und wiederum bevorzugt in Kartenübergröße ausgebildet vorgesehen, auf die ein Klebstoff oder Leim in Form einer formbaren Masse in vorgegebener Menge aufgebracht ist. Der Klebstoff oder Leim kann auch ein halbflüssiges, entsprechend viskoses Kunststofferzeugnis sein und beliebige Eigenschaften besitzen, vorausgesetzt daß sich nach entsprechendem Zeitablauf eine Aushärtung der Klebstoff-Masse ergibt, die zu einer starren, natürlich innerhalb gewisser Grenzen elastisch gebliebener Schicht führt, die durch ihre hervorragenden Klebstoffeigenschaften gleichzeitig einen innigen Verbund mit angrenzenden Karten(teil)schichten eingeht.

Diese Klebstoffmasse, wie sie im folgenden im wesentlichen noch bezeichnet wird, trägt das Bezugszeichen 12 und kann, wie die Draufsicht der Fig. 2 zeigt, beispielsweise aus zwei einander kreuzenden Klebstoffwürstchen oder -raupen bestehen, die in geeigneter Weise auf die untere (PVC)Kartenschicht aufgetragen werden, im einfachsten Fall auch von Hand mit Hilfe eines geeigneten Spenders; bevorzugt natürlich im automatisierten Ablauf, wobei sich dann auch die jeweils abgegebene Menge genauer einstellen läßt.

Aus den weiteren Erläuterungen lassen sich auch die erforderlichen bzw. wünschenswerten Eigenschaften der Klebstoffmasse besser verstehen, so daß im folgenden anhand der Darstellung der Fig. 1 zunächst auf das weitere Vorgehen eingegangen wird. Nach oben schließt sich im Verbund eine mittlere Schicht 13 an, die zusammengesetzt sein kann aus einem flachen Träger oder einer Trägerschicht 13' und von dieser Schicht getragenen, in ihr enthaltenen oder sonstwie an ihr befestigten elektronischen oder elektrischen Bauelementen, etwa eine auf die Trägerschicht 13' nach üblichen Kaschierungstechniken aufgedruckte Spulenwicklung 14 als Antenne, aus integrierten Schaltungsteilen 15, aus auf der Trägerschicht 13' nach üblichen bekannten SMD-Techniken aufgebrachten weiteren elektrischen oder elektronischen Bauelementen 16 u.dgl. SMD ist die Abkürzung für "surface mounted device" und bedeutet so viel wie kleineres elektrisches Bauelement, welches durch einen Klebevorgang auf einer Trägeroberfläche befestigt und auch elektrisch, am besten durch Tauchlöten, mit dieser verbunden ist.

Aus der Darstellung der Fig. 1 erkennt man, daß die mittlere Schicht 13 durchaus auch über Einschlüsse, vorspringende Teile, Kanäle u.dgl. verfügen kann, so daß der elektrische/elektronische Aufbau in beliebiger Form und den Erfordernissen angepaßt möglich ist.

Auch auf diese Zwischenschicht oder mittlere Schicht 13 wird eine abgemessene Menge der Klebstoffmasse 12 aufgebracht, beispielsweise ebenfalls wieder in sich kreuzender Raupenform, wobei es sich versteht, daß es auch möglich ist, diese Klebstoffgabe auf der Unterseite einer letzten oberen (PVC)Deckschicht 17 anzubringen, dann auf deren, dem Verbund zugewandten Seite.

Hierbei versteht es sich ferner, daß das Aufbringen der Klebstoffmasse 12 in vollständig beliebiger Form erfolgen kann, also auch durch einen mittleren Klecks oder durch zwei mittlere, am besten symmetrisch auf der jeweiligen Fläche verteilte Doppelkleckse; die Menge der so zwischen den Schichten angeordneten Klebstoffmasse ist jedenfalls durch entsprechende Untersuchungen, Feststellungen oder Berechnungen so bemessen, daß bei gleichmäßiger Verteilung der Klebstoffmasse in Form einer flächigen Beschichtung der zugewandten Flächen eine bestimmte Dicke dieser sich so bildenden Klebstoffschichten erzielt wird, und zwar eine Dicke, die sich problemlos vorab bestimmen und festlegen läßt und die jedenfalls in der Lage ist, die mittlere Schicht 13 mit ihren elektrischen oder elektronischen Bauteilen sozusagen zwischen die beiden Deckschichten 11 und 17 einzuschwemmen und, jedenfalls zunächst, praktisch lose zu halten. Unter der Bemerkung "zunächst" ist dabei der Umstand zu verstehen, daß diese "lose" Fixierung der mittleren Schicht 13 oder, bei anderen Ausführungsbeispielen lediglich von elektrischen oder elektronischen Bauteile so lange erfolgt, bis die diese Schicht oder die Bauteile einschließende Klebstoffmasse ausgehärtet ist.

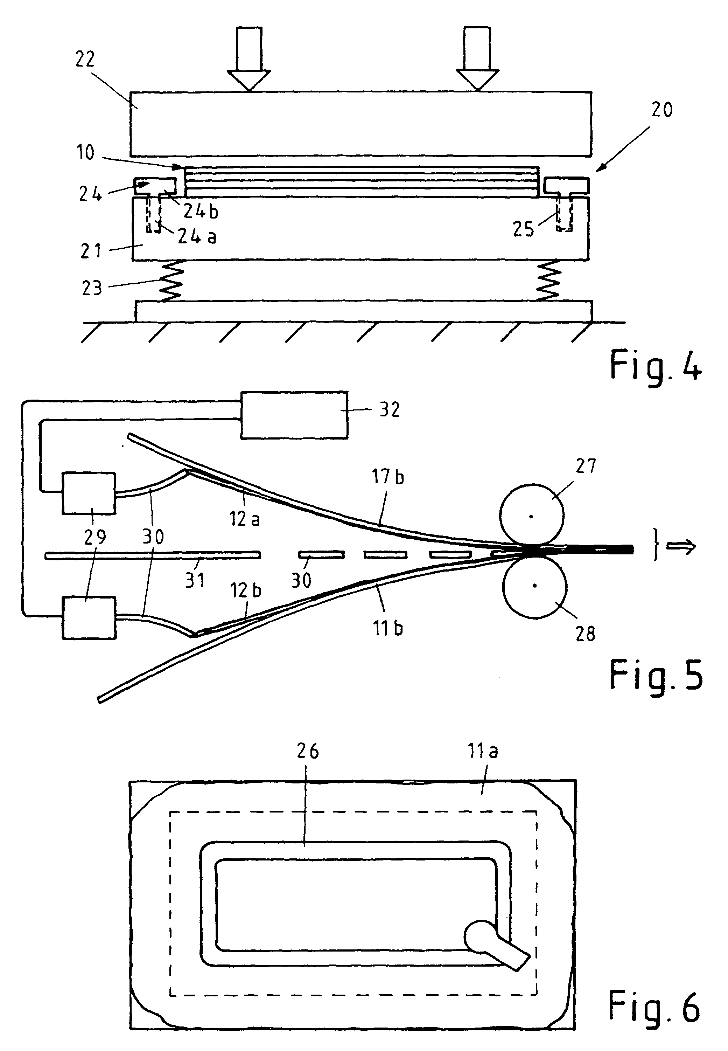

Der weitere Herstellungsvorgang ergibt sich dann durch Einlegen des später die fertige Karte bildenden Schichtenverbunds 10 mit den zwischen den Schichten befindlichen Klebstoff-Häufchen, -Klecksen oder -Raupen in eine geeignete, jedoch entscheidend modifizierte Druckpresse 20, wie diese in Fig. 4 gezeigt ist. Durch die zunächst, jedenfalls bei diesem dargestellten Ausführungsbeispiel noch so lokalisiert in Raupenform oder sonstwie angeordneten Klebstoffmassenhäufchen hat der Verbund aus den Schichten 11, 13 und 17 eine zunächst nicht definierte Dicke; diese Verbundschicht wird durch die Druckpresse 20 der Fig. 4 auf einen definierten Abstand zusammengepreßt. In diesem Zusammenhang ist noch auf folgendes hinzuweisen. Die Druckpresse 20 der Fig. 4 besteht aus einer unteren Gegendruckplatte 21, einer oberen Druckplatte 22 und federnden Lagermitteln 23 für die untere Druckplatte, die sicherstellen, daß bei beliebigen, von der oberen Druckplatte 22 durch beliebige Einwirkung erzeugten Drücken der sich auf den eingelegten Kartenschichtverbund 10 auswirkende Druck vorgegebene und voreinstellbare Werte nicht übersteigt. Dies wird sichergestellt durch die die Gegendruckplatte 21 tragenden Federn 23, die beim Herunterfahren der Druckplatte 22, was mit beliebiger Krafteinwirkung, jedoch über einen vorgegebenen Zeitraum verteilt, zu erfolgen hat, sicherstellen, daß durch entsprechendes Nachgeben der Federn 23 der tatsächlich zwischen den beiden Platten 21, 22 auftretende Druck durch den Gegendruck der Federn 23 begrenzt ist, wie ohne weiteres einzusehen ist. Es versteht sich, daß für die Betätigung der Druckplatte 22 beispielsweise auch Druckluft eingesetzt werden kann, wodurch die Planizität besonders einfach sichergestellt werden kann, da Druckluft auf sämtliche Teile der oberen Druckplatte gleichmäßig einwirkt. Durch den gleichmäßig über die Fläche sich auswirkenden begrenzten Druck auf den Kartenschichtverbund 10 wird dieser für einen vorgegebenen Zeitraum, was von der Geschwindigkeit des Herabfahrens der Druckplatte 22 bestimmt ist, zusammengedrückt. Dieses Zusammendrücken mit begrenzter Druckwirkung führt dazu, daß die Klebstoffraupen 12, 12', allgemein ausgedrückt also die zwischen den Schichten angeordneten Klebstoffmassen zunehmend flachgedrückt werden und sich entsprechend ihrer Viskosität und ihrem Fließverhalten folgend folgerichtig über die gesamte zur Verfügung stehende Fläche ausbreiten, wobei es sich versteht, daß die Geschwindigkeit des Zusammenpressens auf das Fließverhalten des Klebstoffes abgestimmt ist, dessen Masse auf die erwünschte Dicke der sich so bildenden Klebstoffschicht und die Begrenzung des Druckes zusammen mit der Zeitdauer des Druckaufbringens, ebenfalls abgestimmt auf das Fließverhalten oder Viskosität der Klebstoffmasse sicherstellt, daß diese Gelegenheit erhält, sich über die gesamte Fläche in gleichmäßiger Form auszubreiten. Werden beispielsweise im Abstand zueinander lediglich zwei Klebstoffkleckse aufgetragen, so ergibt sich auch hier eine vollständig einwandfreie gleichmäßige Ausbreitung des Klebstoffes in Schichtform, da die Kleckse zunächst aufeinander zuwandern bei allmählicher Druckausübung, dann, wenn sie sich erreicht haben, versuchen, weiter seitlich auszuweichen und den gesamten zur Verfügung stehenden Raum auszunutzen, so daß sich eine ideale Kombination der Verbundherstellung mit den erforderlichen Freiheitsgraden für die schwimmende Einbettung der empfindlichen elektrischen oder elektronischen Bauteile ergibt.

Es versteht sich natürlich, daß die Druckaufbringung nicht fortlaufend stattfindet, was, da die Nachgiebigkeit des Kartenschichtverbundes durch dessen endliche Dicke begrenzt wäre, zu einem ständig ansteigenden Druckaufbau führt, sondern es wird im Gegenteil bei Erreichen einer vorgegebenen Gesamtschichtdicke des eingelegten Kartenschichtverbunds die durch den Druck bewirkte Aufeinanderzubewegung der Druckplatten 21 und 22 abgestoppt und so eine vorgegebene Kartenenddicke realisiert und eingestellt, die sich auf folgende Weise bestimmt. Es werden die durch physikalische Gegebenheiten nicht änderbaren Kartenteildicken der einzelnen Schichten zusammengezählt und die Schichtdicken X1 und X2 bestimmt, die die verteilten Klebstoffmassen zu beiden Seiten der mittleren Schicht 13 im Verbund einnehmen sollen. Hieraus ergibt sich eine Gesamtschichtdicke

$$D_G = d_{11} + d_{13} + d_{17} + X1 + X2.$$

Sobald diese Gesamtverbundschichtdicke beim Preßvorgang erreicht ist, die dann auch der Dicke der fertigen Karte entspricht, wird der Druckvorgang bzw. das Aufeinanderzubewegen der beiden Druckplatten 21, 22 abgestoppt, unterbrochen oder sonstwie abgebremst, und anschließend werden die Klebstoffschichten zur Aushärtung gebracht. Die Dicke dieser Schichten braucht nicht mehr als etwa 0,1 mm zu beiden Seiten der Mittelschicht 13 zu betragen, kann jedoch, den Anforderungen der abzudeckenden, einzuschwemmenden und insofern (zunächst) lose zu haltenden elektronischen und elektrischen Bauteile beliebig bemessen werden, was sich durch entsprechende Einstellung der erreichten endlichen Abstandsdicke und der beigegebenen Menge an Klebstoffmasse realisieren läßt.

Bei dem in Fig. 4 dargestellten Ausführungsbeispiel sind in einer besonderen Ausgestaltung der Erfindung zur Beendigung des Preßvorgangs bei Erreichen der gewünschten vorgegebenen Kartenverbund-Enddicke in geeigneter Weise Anschläge 24 oder Stoppmarken vorgesehen, wobei die Anschläge 24 mit präzise vorgegebener Dicke zwischen den beiden Druckplatten 21, 22 zu liegen kommen und so den Endabstand bestimmen. Es versteht sich, daß es möglich ist, bei einem solchen in vorteilhafter einfachen, jedoch praktischen Gerät unterschiedliche Anschläge 24 vorzusehen, wobei die Anschläge jeweils aus einem Schaftteil 24a und einem Köpfchen 24b bestehen; der Schaftteil dient dem losen Einsetzen in eine geeignete Aufnahmebohrung 25 in der Gegendruckplatte 21, während das Kopfteil 24b in seiner Höhe durch unterschiedliche Bearbeitungsmaßnahmen (Schleifen) unterschiedliche Dicken vorgeben kann, so daß durch die Vorrathaltung einer geeigneten Anzahl von Abstandselementen 24 für eine Vielzahl von Chipkarten unterschiedliche Dickenendabmessungen vorgegeben werden können.

Zusammengefaßt spielt sich der Herstellungsvorgang einer solchen Karte also so ab, daß die obere Druckplatte 22 in geeigneter Weise mechanisch abwärts gefahren wird, mit endlicher Annäherungsdauer an die untere Gegendruckplatte 21 und ohne daß bei diesem Ausführungsbeispiel jedenfalls auf den von der oberen Platte 22 ausgeübten effektiven Druck Rücksicht genommen zu werden braucht, da die untere Gegendruckplatte 21 über ihre Federlagerung 23 entsprechend ausweichen kann und so überschüssige Druckkräfte aufnimmt oder auffängt, wenn diese nicht durch das sich im Verlaufe der Abwärtsbewegung der Druckplatte 22 ergebende Zusammendrücken des Kartenschichtverbunds wirksam werden. Sobald die vorgegebene gewünschte Kartenenddicke erreicht ist, treten die Anschläge 24 in Funktion und begrenzen die weitere relative Abwärtsbewegung der Druckplatte 22 - mit anderen Worten, die erreichte Dicke wird konstant gehalten.

Aus diesem Grunde ist es auch möglich, die obere Druckplatte 22 beispielsweise durch eine Kniehebelmechanik, die auch manuell betätigt werden kann, nach unten zu drücken und in der Endposition in eine Übertotpunktstellung zu überführen, in welcher die erreichte Position gesichert ist, bis durch eine erneute Aufwärtsbewegung der Platte der Kartenverbund entnommen werden kann.

Überschüssige Bewegungen der oberen Druckplatte 22 werden, wie erwähnt, durch die Federlagerung 23 der unteren Platte aufgefangen.

Die Aushärtung der gleichmäßig verteilten Klebstoff- oder Leimschichten erfolgt dann je nach Materialbeschaffenheit und den Eigenschaften der verwendeten Klebstoff-, Leim- oder Kunststoff-Klebmasse; bei normaler Aushärtung können mehrere Stunden vergehen; es ist aber auch möglich, Klebstoffmassen zu verwenden, die durch bestimmte Eigenschaften UV-härtend sind, die also über lichtsensitive Bestandteile verfügen, die ein Aushärten in kürzerer Zeit sicherstellen.

Hierzu kann so vorgegangen werden, daß mit Vorzug solche UV-härtenden Klebstoffmaterialien verwendet werden oder mit entsprechenden Zusätzen versehen werden, die nicht schlagartig bei UV-Lichteinwirkung aushärten (sogenannte radikalische Systeme), sondern Materialien, die durch eine anfängliche UV-Lichtbestrahlung lediglich initialisiert werden und dann allmählich, jedoch innerhalb kürzerer Zeiträume wie beispielsweise einige Minuten eine völlige Durchhärtung erreichen (kationische Systeme). In diesem Falle ist es möglich, vor Auflegen der jeweiligen (opaken) Deckschichten auf die aufgebrachte oder eingebrachten Klebstoffmassen diese kurz einer UV-Strahlung auszusetzen, den Verbund zu vervollständigen, zu pressen und diesen gegebenenfalls noch so lange in der Presse zu lassen, bis er vollständig ausgehärtet ist. Dies ist allerdings nicht erforderlich, da nach einem anfänglichen Zusammenpressen und der Schichtannahme der Klebstoffschichten diese ihre Dimensionen und Ausdehnungen nicht mehr verändern, was beispielsweise durch eine entsprechende Wahl oder Einstellung der Schwemmasse erreichbar ist.

Ein weiterer Gesichtspunkt kann hier noch von Bedeutung sein; es ist weiter vorn schon erwähnt worden, daß die den Kartenschichtverbund bildenden Außenschichten Übermaß aufweisen, da auch bei sehr genauer Bemessung der jeweiligen zuzugebenden Klebstoffmassen nicht immer sichergestellt ist, daß beim Zusammenpressen auch noch äußerste Eckkanten gleichmäßig von der sich ausbreitenden Klebstoffmasse erfaßt und bedeckt werden. Werden, wie in der Darstellung der Fig. 2 in Draufsicht gezeigt, für die Herstellung des Kartenschichtverbunds 10 Ausgangslaminatschichten mit Übermaß verwendet, dann ist auf jeden Fall sichergestellt, daß die beigegebenen Klebstoffmassen die von den einzelnen Schichten zur Verfügung gestellte Fläche jedenfalls so weit gleichmäßig ausfüllen und sich über diese ausbreiten, wie dies einem späteren Kartenmaß, welches in Fig. 2 gestrichelt angedeutet und mit 11' bezeichnet ist, entspricht. Diese Übergröße der verwendeten Ausgangsteilschichten ist auch deshalb zu empfehlen, damit mit eher geringeren Klebstoffmassen gearbeitet werden kann, als für die absolut vollständige Bedeckung von Übermaß-Schichten erforderlich ist. Kartenendmaße aufweisende "Laminatschichten" würden bei nur geringen Ungenauigkeiten in der Zugabe von Klebstoffmengen sonst zulassen, daß Klebstoff auch über die Ränder herausquellen könnte, was unerwünscht ist und auch unter Umständen zu einem Verkleben von Geräteilen führen kann. Aufgrund der Übergrößen der verwendeten Teilschichten ist die Mengenzugabe der verwendeten Klebstoffschichten nicht kritisch und kann problemlos auch manuell vorgenommen werden, falls gewünscht, da immer lediglich nur eine so große Klebstoffmenge zugegeben werden muß, wie sicherzustellen ist, daß das innere echte Kartenformat 11' gleichmäßig und beidseitig der elektronischen Bauteile Klebstoffschichten vorgegebener Dicke enthält.

Es ist dann nach Aushärtung der Klebstoffschichten, die in der Querschnittdarstellung der Fig. 3 mit X1 und X2 bezeichnet sind, noch erforderlich, den fertigen Kartenschichtverbund auf die Dimensionen des üblichen Kartenformats zurechtzuschneiden, beispielsweise durch Stanzen. Ist ein solcher Stanzvorgang aufgrund einer bestimmten Materialauswahl nicht zu empfehlen, dann kann mit größerem Randabstand gestanzt werden, wobei dann eine Feinbearbeitung auf das endgültige Kartenformat durch randseitiges Fräsen o.dgl. noch erfolgen kann in entsprechenden Automaten.

Es ist auch möglich, unter Zugrundelegung des erfindungsgemäßen Verfahrens Halbfertigprodukte herzustellen, also beispielsweise Zwischenschichten, wie sie als mittlere Schicht 13 in dem Ausgangsprodukt der Fig. 1 angegeben sind. In diesem Falle kann, wie in Fig. 6 gezeigt, eine untere Trägerschicht 11a, beispielsweise aus einem geeigneten, transparenten Kunststoffmaterial vorgesehen sein, ebenfalls in entsprechender Übergröße, die mit den jeweils vorgesehenen elektrischen und/oder elektronischen Bauelementen bestückt wird, indem diese beispielsweise auf die Trägerschicht 11a aufgelegt, in entsprechenden rinnenförmigen Ausnehmungen 26 in diese auch eingelegt (zur Bildung von Antennen) oder sonstwie mit der Trägerschicht 11a vorläufig verbunden werden. Diese Trägerschicht ist dann die untere Schicht entsprechend dem Ausführungsbeispiel, welches weiter vorn anhand der Darstellung der Figuren 1 und den folgenden erläutert worden ist, und es ist dann möglich, auf die Trägerschicht und/oder auf die auf dieser schon aufgelegten oder sonstwie angeordneten elektronischen oder elektrischen Bauelemente die entsprechenden Mengen an Klebstoffmassen, beispielsweise raupenförmig, als Kleckse o.dgl. aufzubringen und anschließend beispielsweise eine einfache, später wieder zu entfernende, nicht mehr benötigte dünne Papierschicht darüberzulegen. Legt man dann das Ganze in eine Druckpresse 20, wie sie in Fig. 4 dargestellt ist, dann preßt sich die Klebstoffmasse in sämtliche Öffnungen, Freiräume, Zwischenräume u.dgl. und wandert auch als sich bildende Schicht auf der Trägerplatte nach außen, so daß auch hier wieder die lose Einbettung und das Einschwemmen der elektronischen oder elektrischen Bauteile erfolgt, bis die Enddicke erreicht ist, bei welcher die in diesem Fall durch eine einmalige Klebstoffmassenaufbringung vorgegebene Klebstoffschicht ihre gewünschte Dicke erreicht hat. Auf diese Weise gelingt es, die Bauteile auf der Trägerplatte 11a geschützt und störungssicher zu verankern und einzusiegeln und gleichzeitig auf dieser zu befestigen, so daß dann eine solche Bauelementen-Ausgangsplatte als Zwischenerzeugnis weiterverarbeitet werden kann, gegebenenfalls auch in normalen, also üblichen Laminierschritten mit weiteren Kartenschichten oder als Zwischenschicht 13 entsprechend den weiter vorn anhand der Darstellung der Fig. 1 erläuterten Abläufen behandelt werden kann. Bei einer solchen Herstellung ist die Klebstoffschicht selbst die mittlere Schicht.

Eine weitere Möglichkeit zur Herstellung entsprechender Chipkartenformen durch Kleben ist in Fig. 5 dargestellt und umfaßt einen eher kontinuierlichen Ablauf, indem obere und untere Deckschichten 11b, 17b, auch in Form von auch von Vorratsrollen abziehbaren Bändern aufeinander ausgerichtet einem Preßrollenpaar 27, 28 zugeführt werden, die zwischen sich einen (einstellbaren) Schlitz vorgegebener Breite bilden.

Will man in diesem Fall Chipkarten herstellen, die dem Kartenschichtverbund der Fig. 1 entsprechen, dann können, auch über automatische Zuführsysteme in Form von Vorratsbehältern und Pumpen 29, die über Düsenaustrittsöffnungen 30 an geeigneter Position verfügen, entsprechende raupenförmige Klebstoffstege 12a auf die Innenseiten der beispielsweise die äußeren Deckschichten bildenden Bänder 11b, 17b kontinuierlich aufgetragen werden, während zwischen den beiden Bändern mit Hilfe geeigneter Fördermittel entweder einzelne Trägerelemente 30, die mit entsprechenden elektronischen oder elektrischen Bauelementen bestückt sind, zugeführt werden oder ebenfalls in Bandform 31 ein kontinuierlicher Träger mit den jeweiligen Bauelementen zwischen die Deckschichten 11b, 17b eingeführt wird, wobei es schließlich auch noch möglich ist, unter Weglassen jeglicher Träger die entsprechenden elektronischen oder elektrischen Bauelemente direkt in den sich auftuenden Spalt zwischen oberer und unterer Deckschicht 11b, 17b einzuführen. Auch hierdurch ergibt sich eine innige lose und insofern schwimmende Einbettung in die schon an den Innenseiten der Bänder haftenden Klebstoffmengen, wobei die Bänder sich beim Einlauf in das Druckwalzenpaar 27, 28 zunehmend annähern, bis sie in den Bereich des sich verengenden Spaltes gelangen, so daß im zeitlichen Ablauf die gleichen Funktionsbedingungen herrschen, wie weiter vorn schon anhand der Darstellung der Druckpresse der Fig. 4 erläutert; durch den zunehmenden, jedoch begrenzten Druck verteilen sich die vorzugsweise beidseitig, gegebenenfalls aber auch einseitig aufgebrachten Klebstoffmassen, letzteres insbesondere dann, wenn lediglich elektrische oder elektronische Bauteile zugeführt werden, innig um diese Bauteile herum und auf den zugewandten inneren Oberflächen der Bänder 11b, 17b, bis sich im engsten Spalt der Preßrollen 27, 28 gleichmäßige Klebstoffschichten ausbilden, die dann mit den elektrischen oder elektronischen Bauelementen die mittlere Schicht 13 bilden, wenn keine eindeutigen eigenen Trägerschichten, wie bei 30 und 31 angedeutet, für die Bauteile vorhanden sind.

Die Transportgeschwindigkeit des kontinuierlichen Kartenschichtverbundes durch die beiden Preßwalzen 27, 28 ist auch hier wieder auf die Klebstoffmassenzusammensetzung, auf dessen Fließfähigkeit oder Viskosität abgestimmt, so daß sichergestellt ist, daß spätestens im engsten Spalt zwischen den Preßwalzen die gewünschten Klebstoffschichten vollständig so verteilt sind, daß bei einem nachfolgenden Zuschnitt einwandfreie Schichtverteilungen aufweisende Kartenformate hergestellt werden können. Der Transport selbst erfolgt bevorzugt durch ein Abziehen des Kartenschichtverbundes hinter den Walzen in Transportrichtung gesehen, also so, daß die Walzen nicht selbst angetrieben sind, was unter Umständen zu Relativverschiebungen führen könnte.

Die Steuerung der über Pumpen und Düsenaustrittsöffnungen 30 aus Vorratsbehältern zugeführten Klebstoffmengen kann bei kontinuierlichem Ablauf bevorzugt mit Hilfe einer geeigneten Steuerschaltung erfolgen, die in Fig. 5 mit 32 bezeichnet ist und auch Mikroprozessoren mit entsprechenden Speichern für verschiedene Einstellungen und Steuerabläufe enthält.

Mit Bezug auf die Darstellung der Fig. 1 ist noch darauf hinzuweisen, daß verständlicherweise bei dem relativ dicken Auftrag der Klebstoffraupen oder -kleckse zu beiden Seiten der mittleren Schicht 13 - oder allgemein bei eingelegten elektronischen oder elektrischen Bauelementen - die Gefahr besteht, daß diese verrutschen, herausgedrückt werden oder ihre Position ändern beim anfänglichen Zusammenpressen, nicht zuletzt gefördert durch ein mögliches Gleit- und Rutschverhalten der Klebstoffmassen. Aus diesen Gründen kann es zweckmäßig sein, außerhalb des Kartenformats in die obere und/oder untere Träger- oder Deckplatte 11, 17 kleinere Haltenocken 13a für die mittlere Schicht 13 zu allen Seiten noch anzuordnen, beispielsweise durch einen leichten Drückvorgang, so daß die mittlere Platte 13 auf den Kunststoffraupen 12, 12' aufliegend eine anfängliche Arretierung und Fixierung erhält. Bei der Kartenendherstellung erfolgt dann der Stanz- bzw. Ausschneidvorgang so, daß diese Haltenocken und die überschüssigen Randbereiche längs der Kartenformatlinie 11', wie weiter vorn schon erwähnt, entfernt werden.

Auf einen wesentlichen Umstand bezüglich der vielfältigen Anwendungsmöglichkeiten und Vorteilen vorliegender Erfindung ist gerade an dieser Stelle noch hinzuweisen. Es versteht sich, daß die Erfindung sich nicht nur für die bisher überwiegend erläuterten, eine interne Elektronik ohne Kontaktmöglichkeiten nach außen enthaltende Chipkarten eignet, sondern auch mit Vorteil für die Herstellung normaler kontaktbehafteter Chipkarten besonders geeignet ist, solche Chipkarten also, die wie beispielsweise Telefonkarten von außen kontaktierbare Anschlüsse aufweisen. Bei diesen kontaktbehafteten Elektronik-Karten ist ein elektronischer Modul vorgesehen, der im Kartenverbund so angeordnet ist, daß Kontakte auf einer der Kartenflächen von außen frei zugänglich sind, so daß beispielsweise bei Einschieben einer Telefonkarte diese Kontakte körperlich von Kontaktfedern im jeweiligen Geräte berührt werden und so eine Kommunikationsverbindung mit dem Chip bzw. mit dem Modul der Karte hergestellt wird.

Entsprechend einem bevorzugten Lösungsweg kann zur Herstellung solcher kontaktbehafteter Chipkarten so vorgegangen werden, daß in eine der jeweiligen äußeren Laminatschichten oder Folien einer entsprechenden Karte eine Öffnung vorgesehen, bevorzugt gestanzt wird, in die der elektronische Modul jedenfalls mit seinen äußeren Kontakten gut eingepaßt werden kann. Von der (späteren) Außenseite wird diese Öffnung dann bevorzugt mit einem geeigneten transparenten Klebeband, welches beispielsweise unter der Warenbezeichnung Scotch-tape oder auch Tesafilm bekannt ist, abgedeckt und anschließend bildet das so vorbereitete Teil eine äußere Kartenschicht, im Falle des zweiten, mit zugeführten und miteinander zu verbindenden Bänder arbeitenden Ausführungsbeispiel beispielsweise das untere Band, nachdem in die Öffnung der Chipmodul entsprechend eingepaßt ist.

Es läßt sich dann nämlich problemlos die Klebstoff/Kunststoff-Masse oder Schwemmasse auf die den mit seinen Kontakten nach außen ragenden Modul tragende oder enthaltende Innenfläche in geeigneter Raupen- oder Klecksform aufbringen und anschließend wird zweckmäßigerweise mit nur noch einem weiteren Deckblatt gearbeitet, welches entsprechend dem ersten Ausführungsbeispiel über Abstandshalterungen aufgepreßt wird, so daß die Schwemmasse mit dem von ihr innig umgebenen und in den Kartenverbund sozusagen einzementierten Modul die dritte innere, insofern mittlere Schicht bildet oder es erfolgt entsprechend dem zweiten Ausführungsbeispiel die Zuführung des Deckschichtbandes und der Durchtritt der beiden Bänder durch das Preßrollenpaar. Auch in diesem Fall bildet sich dann aufgrund des eingestellten Schlitzes vorgegebener Breite zwischen den beiden Preßrollen die dritte mittlere Schicht aus als ursprüngliche Schwemmasse für den eingebrachten Elektronikmodul.

Der Mechanismus, der sich auf diese Weise einstellt, besteht darin, daß die chipfixierte Kartenfolie oder Kartenschicht mit ihren innen liegenden Teilen von den Klebstoffmassen-Schwemmaterial umschwemmt wird, wobei sich wegen der äußeren Tesaschicht ein einwandfreies planes Anliegen und im übrigen auch ein absolut homogener Übergang zwischen dem den Modul oder Chip von allen Seiten umgebenden Schwemmaterial und dem Chip selbst ergibt. Dies gilt besonders dann, wenn die ursprüngliche Stanzöffnung für den Modul nicht ganz passend gewesen ist; das Schwemmaterial dringt in sämtliche Abstände und Zwischenräume ein, so daß der Modul in seinem Kartenausschnitt auch seitlich lagefixiert wird. Anschließend wird das Klebeband abgezogen und die Kontaktanschlüsse des Moduls in der Karte sind von außen frei zugänglich. Auch dieser Vorgang kann automatisch ablaufen entsprechend dem zweiten Ausführungsbeispiel, in dem das äußere Klebstoffband, welches die ausgestanzte Kartenöffnung jeweils abdeckt, mit den Modul-Kontaktanschlüssen als Band von unten bei dem Ausführungsbeispiel in Fig. 2 noch zugeführt werden kann und anschließend, noch vor dem Ausstanzen der einzelnen Karten, als Einheit wieder abgezogen und aufgerollt wird. Ein solches Fertigungsverfahren eignet sich insbesondere für Module, die spezielle Einsetz-Verankerungen oder Haken aufweisen, wodurch die bisher in diesem Zusammenhang verwendeten, zum Teil sehr komplizierten Spritztechniken, die eine solche Herstellung durchaus nicht unwesentlich verteuern, entbehrlich werden.

Besonders bezüglich der zweiten Ausführungsform, bei welcher vorzugsweise aus Vorratsrollen abziehbare Bänder durch ein Preßrollenpaar geführt werden, ist es auch möglich, eine gewünschte Chipvorfixierung, für welche im ersten Ausführungsbeispiel seitliche Haltenocken vorgesehen sind, auch mit einem geeigneten Kleber zu realisieren, mit welchem die jeweiligen elektronischen oder elektrischen Bauelemente, also Chips oder Module auf der entsprechenden zugewandten Kartenseite fixiert oder auf der Bandform 31 des kontinuierlichen Trägers zunächst befestigt werden, bis durch die Zuführung der als Klebstoff und anschließend zu einer dritten Kartenschicht erhärtenden Schwemmasse die Einbettung und insofern Einzementierung der Elektronik übernommen wird.

Ein weiterer interessanter Gesichtspunkt ist noch folgender:
Bei einer eher niedrigviskosen Beschaffenheit der Schwemmasse (Klebstoffmasse) kann es vorteilhaft sein, eine Art Schwemmsperre vorzusehen, die bei dem ersten Ausführungsbeispiel aus einem sich außerhalb der Kartenabmessungen erstreckenden geschlossenen Rähmchen besteht, welches also auf mindestens eine innere Folienfläche der Karte aufgelegt wird und so verhindert, daß beim Pressen eher flüssige Klebstoffmasse noch über die Kartenaußenränder hinaustritt. Ein solches Rähmchen könnte dann gleichzeitig auch als alternative Möglichkeit durch seine Dickenabmessung die Dicke der durch die Klebstoffmasse gebildeten dritten oder mittleren Schicht vorgeben, in welcher auch die Elektronik eingebettet ist. Dies würde bei bestimmten Preßvorgängen die Anordnung von äußeren Druckanschlägen in der Presse auch erübrigen. Das Rähmchen könnte auch ein verlorenes Rähmchen sein und könnte schließlich auch durch eine einstückige Eindrückung der jeweils zugeordneten Kartenfolie gebildet sein, wodurch stegartige Erhebungen in geschlossener Rähmchenform gebildet werden. Diese werden bei der Finishbearbeitung (Formstanzen) abgeschnitten.

Entsprechendes würde auch für die zweite Ausführungsform gelten, wobei in diesem Fall seitlich erhabene Stege im Bandverlauf außerhalb der späteren Kartenabmessungen vorgesehen sind, entweder separat aufgelegt (und beispielsweise durch Kleben befestigt) oder auch hier wieder als einstückig hochgedrückte Stege des Kartenfolienmaterials selbst.

**Patentansprüche**

1. Verfahren zur Herstellung von elektronische und/oder elektrische Bauteile enthaltenden Karten, wobei mehrere Kartenschichten übereinandergelegt und durch Zuführung von Druck miteinander verbunden werden, wobei die elektronischen und/oder die elektrischen Bauteile (14, 15, 16) in einem mittleren Schichtbereich (13) der Karte durch innerhalb der Karte mindestens auf einer Seite mindestens einer Kartenschicht aufgebrachte Klebstoffmengen gehalten werden, wobei die elektronischen und/oder elektrischen Bauteile (14, 15, 16) anfänglich schwimmend, also im wesentlichen berührungsfrei gegenüber den angrenzenden Schichten der Karte gehalten werden, derart, daß die elektrischen und/oder elektronischen Bauteile (14, 15, 16) in der ausgehärteten, auf diese Weise gebildeten Klebstoffzwischenschicht eingebettet in der fertigen Karte gehalten sind **dadurch gekennzeichnet, daß** der mittlere Schichtbereich (13) unter Verzicht auf eine Wärmezufuhr auf eine durch Anschläge vorgegebene Schichtdicke zusammengepreßt und anschließend ausgehärtet wird.

2. Verfahren nach Anspruch 1, **dadurch gekennzeichnet, daß** zu beiden Seiten des mittleren Schichtbereichs (13) Klebstoffmassen in vorgegebener Menge angeordnet und durch einen Preßvorgang so zu Klebstoffzwischenschichten mindestens über das Kartenformat gleichmäßig ausgedehnt gebildet werden, daß die Klebstoffzwischenschicht in der Endform der Karte beidseitig von ausgehärteten Kunststoffschichten in Kontakt zu mindestens einer weiteren Deckschicht (11,17) im fertigen Kartenverbund gehalten ist.

3. Verfahren nach Anspruch 1 oder 2, **dadurch gekennzeichnet, daß** die Aufbringung der Menge der ein vorgegebenes, auf die Preßgeschwindigkeit abgestimmtes Fließverhalten aufweisenden Klebstoffmassen vorgenommen wird.

4. Verfahren nach einem der Ansprüche 1 bis 3, **dadurch gekennzeichnet, daß** die Aufbringung der Menge der Klebstoffmassen im kontinuierlichen Durchlauf vorgenommen wird.

5. Verfahren nach einem der Ansprüche 1 bis 4, **dadurch gekennzeichnet, daß** an mindestens einer Stelle einer ersten, vorzugsweise unteren Kartenschicht eine vorgegebene Menge eines plastischen fließfähigen Klebstoffs oder Leims aufgegeben wird, daß anschließend mindestens unter Zwischenlage des mittleren Schichtbereichs (13), auf diesen eine weitere vorgegebene Menge des fließfähigen Klebstoffs aufgebracht wird und anschließend mindestens eine obere Deckschicht (11, 17) auf den mittleren Schichtbereich (13) aufgelegt und der so gebildete Kartenschichtverbund durch eine für einen vorgegebenen Zeitraum ablaufende Druckeinwirkung bis zu einer vorgegebenen Dicke zusammengepreßt wird, die gleichzeitig die Enddicke der fertigen Karte nach Aushärtung der Klebstoffzwischenschichten ist und die sich aus der Summe der einzelnen Teilschichten zuzüglich der Dicke (X1, X2) mindestens einer weiteren, auf die Aushärtung der eingebrachten Klebstoffmassen zurückführenden Klebstoffzwischenschicht bestimmt.

6. Verfahren nach einem der Ansprüche 1 bis 5, **dadurch gekennzeichnet, daß** die einzelnen Teilschichten mit Übergröße zum Kartenschichtverbund zusammengesetzt und nach Aushärtung der Klebstoffzwischenschichten durch Stanzen und, falls mit größerem Randabstand gestanzt wurde, durch randseitiges Fräsen, auf Endformat gebracht werden.

7. Verfahren nach einem der Ansprüche 1 bis 6, **dadurch gekennzeichnet, daß** zur Sicherung des mittleren Schichtbereichs (13) gegen Veränderung seiner Position beim anfänglichen Zusammendrücken in angrenzende obere und untere Kartenschichten Haltestopps (13a), vorzugsweise durch Eindrücken angeordnet werden, die sich außerhalb des endgültigen Kartenformats befinden.

8. Verfahren nach einem der Ansprüche 1 bis 7, **dadurch gekennzeichnet, daß** die Druckaufbringung auf den durch zwischengefügte Klebstoffmassen vervollständigten Kartenschichtverbund mit Hilfe von einen allmählichen Bewegungsablauf beim Zusammenpressen des Kartenschichtverbunds ermöglichenden Federmitteln erfolgt, die durch feste Anschläge (24) ergänzt werden, die die endgültige Kartenhöhe nach dem Zusammenpressen vorgeben.

9. Verfahren nach einem der Ansprüche 1 bis 8, **dadurch gekennzeichnet, daß** der sich aus den beiden Deckschichten (11, 17) und dem mittleren Schichtbereich (13), sowie ergänzend eingebrachter Klebstoffmassen zusammensetzende Kartenschichtverbund die Form von langgestreckten Bändern aufweist, die allmählich zusammenlaufend in den Druckschlitz von einen vorgegebenen Abstand zueinander aufweisenden Preßwalzen (27, 28) eingeführt werden, derart, daß im Verlauf des sich auf Endabstandsmaß zusammenpressenden Kartenschichtverbunds die gleichmäßige Klebstoffmassenverteilung zur weiteren Schichtbildung realisiert wird bei gleichzeitiger Begrenzung und Vorgabe der endgültigen Schichtdicke durch die verbleibende Walzenöffnung, durch welche der Kartenschichtverbund zum Transport durch die Druckwalzen abgezogen wird.

10. Verfahren nach Anspruch 1 oder 9 **dadurch gekennzeichnet, daß** die Bauteile (14, 15, 16) innerhalb der Karte auf einer Seite der mindestens einen Kartenschicht vor dem Einbringen der Klebstoffmasse mittels eines Klebers lagefixiert werden.

11. Verfahren nach Anspruch 1 zur Herstellung von kontaktbehaftete Elektronikmodule aufweisenden Karten, **dadurch gekennzeichnet, daß** in eine äußere Kartenfolie oder -schicht (11 oder 17) eine mindestens den Kontaktbereich des Elektronikmoduls aufnehmende Öffnung eingebracht wird, vorzugsweise durch Einstanzen, die bei in die Kartenöffnung eingesetztem Modul durch einen Klebfilmstreifen abgedeckt wird, daß anschließend auf die andere, innere, Fläche die zur Bildung einer dritten, gleichzeitig den Elektronikmodul umgebenden und einzementierenden Schicht Klebmasse aufgebracht und diese durch Zuführen mindestens einer weiteren Kartenschicht seinem Fließfähigkeitsverhalten entsprechend verteilt und bis zur Kartenendschichtdicke zusammengepreßt wird und daß anschließend der äußere Klebefilmstreifen von den durch die Kartenschichtöffnung zugänglichen Modulkontakten abgezogen wird.

12. Verfahren nach Anspruch 9 oder 11, zur Herstellung von Karten, welche kontaktbehaftete Elektronikmodule enthalten, **dadurch gekennzeichnet, daß** im durchlaufenden Verfahren zwischen mindestens zwei in einem Preßwalzenschlitz einlaufende Kartenschicht-Bänder (11b, 17b) die Elektronikmodule mit nach außen ragenden Kontaktanschlüssen eingebracht werden.

**Claims**

1. A method of producing cards containing electronic and/or electrical components, wherein a plurality of card layers are laid one above the other and are joined to one another by the application of pressure, wherein the electronic and/or the electrical components (14, 15, 16) are held in a middle layer area (13) of the card by quantities of adhesive applied inside the card to at least one side of at least one card layer, wherein the electronic and/or electrical components (14, 15, 16) are held in an initially floating manner, *i.e.* substantially without contact, with respect to the adjacent layers of the card, in such a way the electronic and/or electrical components (14, 15, 16), embedded in the cured intermediate layer of adhesive formed in this way, are held in the finished card, **characterized in that** the middle layer area (13) is pressed together without the application of heat to form a layer thickness pre-determined by stops and is subsequently cured.

2. A method according to Claim 1, **characterized in that** adhesive substances are provided in a pre-determined quantity on both sides of the middle layer area (13) and are formed by a pressing procedure into intermediate layers of adhesive spread uniformly at least over the format of the card, in such a way that in the final form of the card the intermediate layer of adhesive is held in contact on both sides with at least one further cover layer (11, 17) in the finished card sandwich by cured layers of plastics material.

3. A method according to Claim 1 or 2, **characterized in that** the application of the quantity of the adhesive substances having a pre-determined flow behaviour adjusted to the speed of pressing takes place.

4. A method according to one of Claims 1 to 3, **characterized in that** the application of the quantity of the adhesive substances takes place in a continuous run.

5. A method according to one of Claims 1 to 4, **characterized in that** a pre-determined quantity of a plastic, free-flowing adhesive or glue is applied to at least one point of a first, preferably lower card layer, after that a further pre-determined quantity of the free-flowing adhesive is applied, at least with the interposition of the middle layer area (13), to the latter, and after that at least one upper cover layer (11, 17) is laid on the middle layer area (13) and the card-layer sandwich formed in this way is pressed together to a pre-determined thickness by the action of pressure occurring for a pre-determined period, the said thickness at the same time being the final thickness of the finished card after the curing of the intermediate layers of adhesive and being determined by the sum of the individual partial layers plus the thickness **(X1, X2)** of at least one further intermediate layer of adhesive to be attributed to the curing of the adhesive substances introduced.

6. A method according to one of Claims 1 to 5, **characterized in that** the individual partial layers are combined with an excess size to form the card-layer sandwich and, after the curing of the intermediate layers of adhesive, are put into the final format by punching and, if the punching took place at a relative large marginal distance, by milling at the margins.

7. A method according to one of Claims 1 to 6, **characterized in that** holding stops (13a), which are situated outside the final card format, are arranged, preferably by impressing, in order to prevent the middle layer area (13) from changing its position during the initial pressing together into adjacent upper and lower card layers.

8. A method according to one of Claims 1 to 7, **characterized in that** the application of pressure to the card-layer sandwich completed by interposed adhesive substances is carried out with the aid of springing means which permit a gradual movement procedure during the pressing together of the card-layer sandwich and which are supplemented by fixed stops (24) which pre-determine the final height of the card after the pressing together.

9. A method according to one of Claims 1 to 8, **characterized in that** the card-layer sandwich formed from the two cover layers (11, 17) and the middle layer area (13) as well as adhesive substances additionally introduced is in the form of elongate strips which are inserted in a gradually converging manner into the pressure slot of pressing rollers (27, 28) at a pre-determined distance from each other, in such a way that during the course of the card-layer sandwich pressed together to the dimension of the final distance the uniform distribution of the adhesive substances is carried out for further layer formation at the same time as limiting and pre-determining the final layer thickness by the remaining roller opening through which the card-layer sandwich is drawn off for transportation by the pressure rollers.

10. A method according to Claim 1 or 9, **characterized in that** the components (14, 15, 16) inside the card are fixed in position by means of an adhesive on one side of the at least one card layer before the introduction of the adhesive substance.

11. A method according to Claim 1 for producing cards having contact-charged electronic modules, **characterized in that** an opening, which receives at least the contact area of the electronic module and which is covered by a strip of adhesive film when the module is inserted into the card opening, is introduced into an external card film or card layer (11 or 17), preferably by punching, after that the adhesive substance serving to form a third layer simultaneously surrounding and cementing in the electronic module is applied to the other, inner face and the said adhesive substance distributed in a manner corresponding to its free-flowing behaviour by the application of at least one further card layer and is pressed together until the final layer thickness of the card, and after that the outer strip of adhesive film is drawn off from the module contacts which are accessible through the opening in the card layer.

12. A method according to Claim 9 or 11, in order to produce cards which contain contact-charged electronic modules, **characterized in that** in the continuous process the electronic modules with outwardly projecting contact terminals are introduced between at least two card-layer strips (11b, 17b) running into a pressing-roller slot.

## Revendications

1. Procédé de fabrication de cartes contenant des composants électroniques et/ou électriques, dans lequel différentes couches formant la carte sont superposées et reliées les unes aux autres par l'application d'une pression, les composants électroniques et/ou électriques (14, 15, 16) étant maintenus dans une zone de couche médiane (13) de la carte par des quantités d'adhésif appliquées à l'intérieur de la carte au moins sur un côté d'au moins une couche de la carte, les composant électroniques et/ou électriques (14, 15, 16) étant maintenus initialement de façon flottante, c'est-à-dire pour l'essentiel sans contact par rapport aux couches voisines de la carte, de telle sorte que les composant électriques et/ou électroniques (14, 15, 16) sont maintenus dans la carte finie en étant insérés dans la couche intermédiaire d'adhésif durcie formée de cette manière,
**caractérisé en ce que**
la zone de couche médiane (13) est pressée puis durcie sans recourir à un apport de chaleur, pour former une épaisseur de couche prédéterminée.

2. Procédé selon la revendication 1,
**caractérisé en ce que**
des masses d'adhésif en quantités prédéterminées sont disposées des deux côtés de la zone de couche médiane (13) et sont étendues de façon uniforme au moins sur tout le format de la carte par un procédé de compression pour former des couches intermédiaires d'adhésif, de telle sorte que la couche intermédiaire d'adhésif, dans la forme finale de la carte, est maintenue des deux côtés par des couches de matière plastique durcies en contact avec au moins une autre couche de recouvrement (11, 17) dans le composé de carte fini.

3. Procédé selon la revendication 1 ou 2,
**caractérisé en ce qu'**
on réalise l'application de la quantité des masses d'adhésif présentant une fluidité prédéterminée, adaptée à la vitesse de compression.

4. Procédé selon l'une des revendications 1 à 3,
**caractérisé en ce qu'**
on réalise l'application de la quantité des masses d'adhésif en continu.

**5.** Procédé selon l'une des revendications 1 à 4, **caractérisé en ce qu'**

au niveau d'au moins un emplacement d'une première couche de la carte, de préférence inférieure, est appliquée une quantité prédéterminée d'un adhésif ou d'une colle fluide plastique, et ensuite, au moins après avoir intercalé la zone de couche médiane (13), une autre quantité prédéterminée de l'adhésif fluide est appliquée sur celle-ci, puis au moins une couche de recouvrement supérieure (11, 17) est appliquée sur la zone de couche médiane (13) et le composé de couches formant la carte ainsi formé est compressé, jusqu'à atteindre une épaisseur prédéterminée, par l'application d'une pression pendant une période prédéterminée, cette épaisseur étant dans le même temps l'épaisseur finale de la carte finie après durcissement des couches intermédiaires d'adhésif, correspondant à la somme des couches partielles individuelles plus l'épaisseur (X1, X2) moins une autre couche intermédiaire d'adhésif due au durcissement des masses d'adhésif appliquées.

**6.** Procédé selon l'une des revendications 1 à 5, **caractérisé en ce que**

les couches partielles individuelles sont assemblées avec une dimension supérieure par rapport au composé de couches formant la carte et, après durcissement des couches intermédiaires d'adhésif, sont amenées au format final par emboutissage et, si l'emboutissage s'est effectué avec une dimension supérieure en bordure, par fraisage en bordure.

**7.** Procédé selon l'une des revendications 1 à 6, **caractérisé en ce que**

pour la fixation de la zone de couche médiane (13) et empêcher une modification de sa position lors de la compression initiale, il est prévu des éléments d'arrêt (13a) dans les couches voisines supérieure et inférieure de la carte, les éléments étant de préférence mis en place par enfoncement et se trouvant à l'extérieur du format de carte final.

**8.** Procédé selon l'une des revendications 1 à 7, **caractérisé en ce que**

l'application d'une pression sur le composé de couches formant la carte complété par les masses d'adhésif intercalées s'effectue à l'aide de moyens élastiques permettant un mouvement progressif de compression du composé de couches formant la carte, ces éléments élastiques étant complétés par des butées fixes (24) qui déterminent la hauteur de carte finale après la compression.

**9.** Procédé selon l'une des revendications 1 à 8, **caractérisé en ce que**

le composé de couches formant la carte, constitué des deux couches de recouvrement (11, 17) et de la zone de couche médiane (13), ainsi que des masses d'adhésif ajoutées en complément, présente la forme de rubans étirés, qui sont progressivement introduits en convergeant dans la fente de pression de rouleaux de pression (27, 28) présentant une distance prédéterminée l'un par rapport à l'autre, de telle sorte que sur tout le trajet du composé de couches formant la carte, compressé pour atteindre la dimension finale, on obtient une répartition homogène des masses d'adhésif pour former une autre couche, tout en limitant et en prédéterminant dans le même temps l'épaisseur de couche finale par l'ouverture présente entre les rouleaux, ouverture à travers laquelle est étiré le composé de couches formant la carte pour être transporté à travers les rouleaux de pression.

**10.** Procédé selon la revendication 1 ou 9, **caractérisé en ce que**

les composants (14, 15, 16) sont fixés au moyen d'une colle à l'intérieur de la carte sur un côté d'au moins une couche de carte avant l'introduction de la masse d'adhésif.

**11.** Procédé selon la revendication 1 pour la fabrication de cartes présentant des modules électroniques avec contact, **caractérisé en ce que**

dans un film ou une couche extérieur(e) de la carte (11 ou 17) est introduite, de préférence par estampage, une ouverture accueillant au moins la zone de contact du module électronique, qui est recouverte, lorsque le module est mis en place dans l'ouverture de la carte, par une bande de film adhésif, et ensuite, la masse adhésive formant une troisième couche entourant et cimentant dans le même temps le module électronique est appliquée sur l'autre surface intérieure puis, par l'ajout d'au moins une autre couche de carte, répartit de façon correspondante sa fluidité et est compressée jusqu'à atteindre l'épaisseur finale de la carte, alors, la bande de film adhésif extérieure est retirée des contacts du module accessibles via l'ouverture de couche de la carte.

**12.** Procédé selon la revendication 9 ou 11 pour la fabrication de cartes contenant des modules électroniques avec contact, **caractérisé en ce que**

dans le procédé en continu, les modules électroniques sont introduits entre au moins deux rubans de couches de carte (11b, 17b) passant dans une fente de rouleaux de pression, avec des raccords de contact s'étendant vers l'extérieur.

Fig.1

Fig.2

Fig.3

Fig. 4

Fig. 5

Fig. 6